# EUROPÄISCHE PATENTSCHRIFT

(11) **EP 1 417 527 B1**
(45) Veröffentlichungstag und Bekanntmachung des Hinweises auf die Patenterteilung: **23.11.2005**
(21) Anmeldenummer: 02754523.5
(22) Anmeldetag: 10.08.2002
(51) Int. Cl.: G02B 23/18, G02B 7/10, G02B 15/14

(54) **VERFAHREN UND VORRICHTUNG ZUR FOKUSSIERUNG UND ZUM DIOPTRIE-AUSGLEICH BEI EINEM FERNROHR**
METHOD AND DEVICE FOR FOCUSSING AND DIOPTER COMPENSATION OF A TELESCOPE
PROCEDE ET DISPOSITIF DE FOCALISATION ET DE CORRECTION DIOPTRIQUE POUR TELESCOPE

(30) Priorität: 15.08.2001 DE 10138843
(43) Veröffentlichungstag der Anmeldung: 12.05.2004
(73) Patentinhaber: Leica Camera AG, 35606 Solms (DE)
(72) Erfinder: HENGST, Alfred, 35633 Lahnau (DE); KETTLER, Gernot, 90469 Nürnberg (DE); KAMMANS, Sigrun, 35745 Herborn (DE)
(74) Vertreter: Stamer, Harald
(86) Internationale Anmeldenummer: PCT/DE2002/002950
(87) Internationale Veröffentlichungsnummer: WO 2003/016978

(56) Entgegenhaltungen:
- DE-A- 3 830 620
- DE-A- 4 342 873
- US-A- 5 491 588

## Beschreibung

Die Erfindung betrifft ein Verfahren zur Fokussierung und zum Dioptrie-Ausgleich bei einem Fernrohr und ein solches Fernrohr, mit einem Objektiv und einem diesem zugeordneten, über einen Fokussier-Einstellring verschiebbaren Fokussierglied, dessen Grundstellung über einen riegelbaren Dioptrie-Einstellring verstellbar ist, mit einem Umkehrsystem und einem Okular.

Ein solches Fernrohr ist aus DE 38 30 620 C2 bekannt und dort insbesondere als binokulares Fernglas dargestellt. Wesentliches Merkmal dieses Fernrohres ist ein dem Objektiv zugeordnetes Fokussierglied, das sowohl der Entfernungseinstellung als auch dem Dioptrie-Ausgleich dient. Ein Fokussier-Einstellring und ein Dioptrie-Einstellring sind voneinander entriegelbar. In dieser Stellung kann das Fokussierglied in jedem der beiden Fernrohre unabhängig voneinander entsprechend der individuellen Sehkraft der beiden Augen zur Scharfabbildung auf ein Objekt eingestellt werden. Nach Verriegelung der beiden Einstellringe wird das Fokussierglied in den beiden Fernrohren zur Einstellung auf andere Objektentfernungen simultan um gleiche Beträge verschoben. Die nach außen weisenden Linsenglieder des Objektivs und des Okulars sind gegenüber dem Gehäuse des Fernrohres feststehend, so daß es sich bei der Scharfeinstellung und dem Dioptrie-Ausgleich um eine sogen. Innenfokussierung handelt.

Aus DE 16 94 491 U1 ist ebenfalls ein binokulares Fernrohr mit Innenfokussierung bekannt. Außer der gemeinsamen Verstellung der beiden Fokussierglieder ist bei einem der Rohre noch ein Dioptrie-Ausgleich vorgesehen. Dazu ist ein Dioptrie-Einstellring von dem Fokussier-Einstellring abkuppelbar. Im Gegensatz zum vorgenannten Fernrohr muß hier über die Betätigung des Fokussier-Einstellringes zunächst das Fokussierglied in dem einen Rohr auf ein Objekt zur Scharfabbildung eingestellt werden und danach der Sehunterschied des anderen Auges in dem anderen Rohr durch Abkuppeln des Dioptrie-Einstellringes ausgeglichen werden.

Aus US 5 491 588 A ist ein afokales Fernrohr mit kontinuierlicher Vergrößerungsänderung bekannt. Zur Vergrößerungsänderung werden sowohl ein dem Objektiv als auch ein dem Okular zugeordnetes Linsenglied verschoben. Zum Dioptrie-Ausgleich wird das gesamte Okular zusammen mit dem bei der Vergrößerungsänderung verschobenen Linsenglied zusätzlich entlang der optischen Achse verschoben. Beim Vergrößerungswechsel muß nachfokussiert werden.

Aus US 5 504 624 A ist ebenfalls ein afokales Fernrohr mit kontinuierlich veränderbarer Vergrößerung bekannt, bei dem das dem Okular zugeordnete Linsenglied nur zur Vergrößerungsänderung zusammen mit dem dem Objektiv zugeordneten Linsenglied verschoben wird. Der Dioptrie-Ausgleich erfolgt über eine separate Okular-Linsengruppe durch Verschieben längs der optischen Achse. Der mechanische Aufwand für die Verstellung der miteinander gekoppelten Linsenglieder für die Vergrößerungsänderung ist beträchtlich. Die zusätzliche Verstellung des Okulars zum Dioptrie-Ausgleich führt zu einer Veränderung der Baulänge des Gesamtsystems.

Aus DE 43 42 873 A1 ist ein Fernrohr mit zwei festen Okular-Brennweiten bekannt. Die Veränderung der Vergrößerung erfolgt durch Umschalten eines Linsengliedes im Okularbereich aus einer ersten Stellung in eine zweite Stellung. Änderungen in der Objektweite werden durch axiale Verschiebung des Okulars ausgeglichen. Das gleiche gilt für den Augenfehler des Betrachters, wobei beim Übergang von einer Okularvergrößerung in die andere das Okular gesondert nachgestellt werden muß. Auch bei diesem System ändert sich die Baulänge mit der korrekten Scharfabbildung.

Aus den vorgenannten Druckschriften ergibt sich die Erkenntnis, daß bei Fernrohren mit veränderlicher Okularbrennweite die Elemente für den Dioptrie-Ausgleich in Lichtrichtung hinter dem Vergrößerungs-Verstellglied anzuordnen sind. Dadurch wird erreicht, daß die Wirkung des für den Dioptrie-Ausgleich verantwortlichen Linsengliedes bei der Vergrößerungsverstellung konstant bleibt.

Analog zum Begriff der Fernrohrvergrößerung sollen nachfolgend eine nur von der Okularbrennweite abhängige Vergrößerung als Okularvergrößerung Γ und ein Okular mit veränderbarer Brennweite als Okular mit veränderbarer Vergrößerung bezeichnet werden.

Wenn aber sowohl die Einstellelemente für die Vergrößerungsänderung als auch die Einstellelemente für den Dioptrie-Ausgleich am Okular angeordnet sind, dann ergeben sich Probleme bei der Anordnung einer üblicherweise außerdem noch gewünschten beweglichen Augenmuschel für Brillen- und Nicht-Brillenträger. Eine solche Augenmuschel vergrößert zusätzlich das Bauvolumen des Okulars, wodurch bei binokularen Fernrohren der einstellbare Augenabstand nach unten begrenzt wird und der Freiraum für die Nase des Benutzers erheblich eingeschränkt ist.

Die am Okular notwendigerweise nahe beieinander liegenden Einstellelemente erschweren die Bedienung. Mit einer unbeabsichtigten Verstellung eines der Elemente muß gerechnet werden.

Der Erfindung lag daher die Aufgabe zugrunde, bei einem Fernrohr mit innen liegender Objektiv-Fokussierung und einem Dioptrie-Ausgleich die Möglichkeit für eine Änderung der Okularvergrößerung zu schaffen, die eine einfache und kompakte Gestaltung des Okulars erlaubt und die Konstanz der Dioptrie-Einstellung beim Vergrößerungswechsel gewährleistet.

Diese Aufgabe wird bei einem Verfahren der eingangs genannten Art erfindungsgemäß durch die kennzeichnenden Merkmale des Anspruchs 1 gelöst. Eine vorteilhafte Ausgestaltung ergibt sich aus dem Merkmal des Unteranspruchs 2.

Bei der Gestaltung eines Fernrohres der eingangs genannten Art wird diese Aufgabe erfindungsgemäß durch die Merkmale des Anspruchs 3 gelöst. Vorteilhafte Weiterbildungen ergeben sich aus den Merkmalen der Unteransprüche 4 bis 10.

Der wesentliche Schritt zur Lösung der gestellten Aufgabe ist darin zu sehen, bei einem dem Objektiv zugeordneten Fokussierglied neben der Verstellung zum Dioptrie-Ausgleich zusätzlich eine von der Vergrößerungsänderung des Okulars abhängige Verstellung zu bewirken, die die Scharfabbildung beim Vergrößerungswechsel konstant hält. Ausgehend von einer Dioptrie-Verstellung z₁ bei einer Okularvergrößerung Γ₁ soll sich bei einer Okularvergrößerung Γ₂ die Dioptrie-Verstellung auf den Wert z₂ = (Γ₁/Γ₂)² ∗ z₁ verändern.

Der angegebene Zusammenhang zwischen den Verstellwerten z₁ und z₂ für den Dioptrie-Ausgleich gilt auch bei kontinuierlicher Veränderung der Okularvergrößerung. Er läßt sich über eine Kurvenscheibe mechanisch jedoch insbesondere bei einer Umschaltung der Okularvergrößerung zwischen wenigen diskreten Vergrößerungswerten realisieren.

Die Verlagerung der bei Okularen mit veränderbarer Brennweite üblicherweise am Okular vorzunehmenden Dioptrie-Verstellung aus dem Okular heraus entlastet das Okular in konstruktiver Hinsicht beträchtlich. Es entfällt ein variables optisches Element im Okular, wodurch zusätzliche Probleme beim Optik-Design entfallen. Die gewonnene Freiheit kann für eine verbesserte optische Leistung genutzt werden. Am Okular befindet sich nur der Einstellring für die Vergrößerungsänderung. Das Bauvolumen des Okulars kann gering gehalten werden, so daß ein kleinerer einstellbarer Augenabstand und ein größerer Freiraum für die Nase bei binokularer Anordnung der Fernrohre möglich sind.

In der Zeichnung sind Ausführungsbeispiele schematisch dargestellt und werden nachfolgend anhand der Figuren näher beschrieben. Dabei zeigen:
- Fig.1: ein monokulares Fernrohr,
- Fig.2: ein binokulares Fernrohr,
- Fig.3: einen Ausschnitt aus dem Fokussier- und Dioptrie-Einstellgetriebe,
- Fig.4: eine Abwicklung einer Kurvenscheibe und
- Fig.5: eine Ansicht auf die Kurvenscheibe.

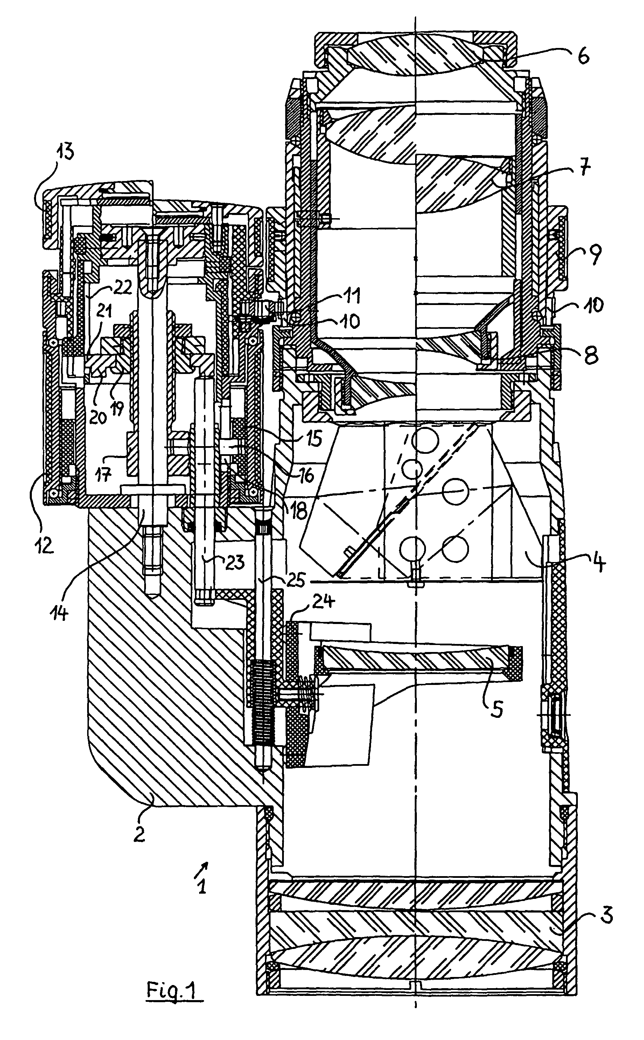

Das in Fig.1 dargestellte monokulare Fernrohr 1 enthält ein im Gehäuse 2 fest angeordnetes Objektiv 3, ein Umkehrsystem 4 und ein Okular. Dem Objektiv 3 ist ein Fokussierglied 5 zugeordnet, das in dem Gehäuse 2 längsverschieblich gelagert ist. Das Okular besteht aus einem im Gehäuse 2 fest angeordneten Außenglied 6 und zwei innen liegenden Linsengliedern 7, 8, die gegeneinander verschiebbar angeordnet sind. In der linken Hälfte der Schnittzeichnung ist mit den weit auseinander liegenden Linsengliedern 7, 8 die Einstellung hoher Okularvergrößerung dargestellt und in der rechten Hälfte die Einstellung mit niedrigerer Okularvergrößerung. Die gegenseitige Verschiebung der Linsenglieder 7, 8 wird durch Drehen an einem Vergrößerungs-Einstellring 9 und damit gekoppelten Kurvenführungen in den Fassungshülsen für die Linsenglieder 7, 8 bewirkt. Die Kurvenführungen werden nicht weiter beschrieben, da solche Verstellungen allgemein bekannt sind und nicht Gegenstand der Erfindung sind. Die Abbildungskorrektion des Okulars ist für die jeweiligen Vergrößerungen in den dargestellten Endstellungen optimiert. Es sind dafür z.B. eine 8-fache und eine 12-fache Vergrößerung vorgesehen.

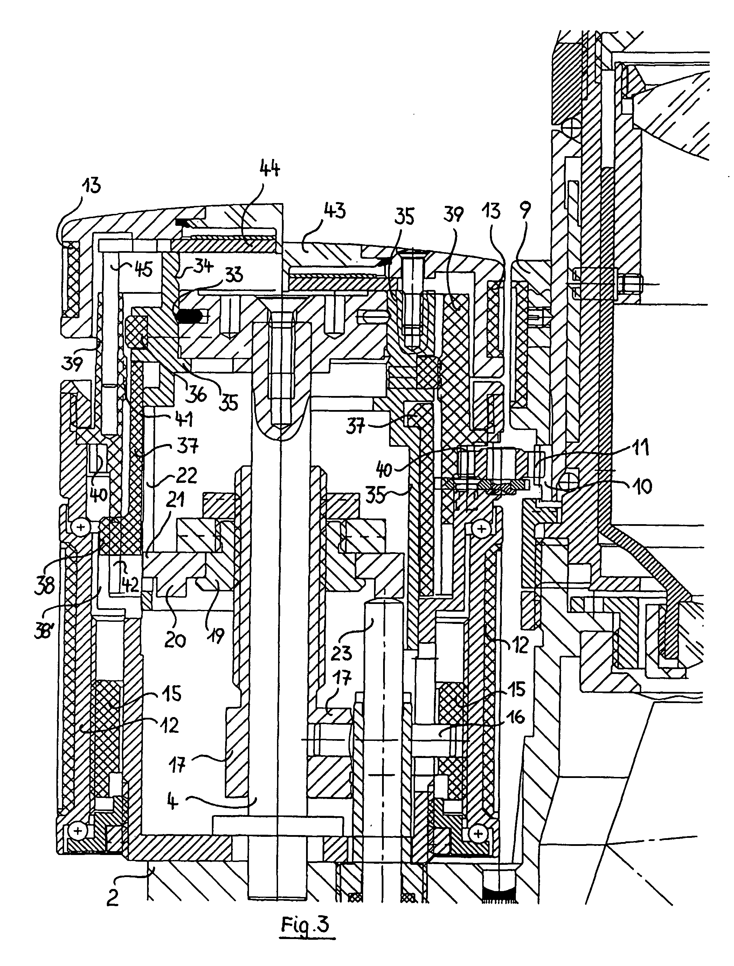

An dem Vergrößerungs-Einstellring 9 befindet sich ein äußerer Zahnkranz 10, in den ein am Gehäuse 2 drehbar gelagertes Zahnrad 11 eingreift. Das Zahnrad 11 steht in getrieblicher Verbindung mit der Dioptrie-Verstellung, die anhand der Fig.3 näher beschrieben wird.

An dem Gehäuse 2 sind ein Fokussier-Einstellring 12 und ein Dioptrie-Einstellring 13 um eine gemeinsame Achse 14 drehbar gelagert. Der Dioptrie-Einstellring 13 ist in der rechts gezeigten Darstellung mit einem später näher beschriebenen Zylinderelement 39 verriegelt und kann durch Hochziehen entriegelt werden. Weitere Einzelheiten sind aus der Fig.3 zu entnehmen.

Mit dem Fokussier-Einstellring 12 ist ein in Richtung der Achse 14 bewegliches Schneckenglied 15 gekoppelt. Das Schneckenglied 15 ist über einen Zapfen 16 mit einem auf der Achse 14 verschiebbar gelagerten Schubelement 17 verbunden. Der Zapfen 16 wird in an sich bekannter Weise in einem ortsfesten Längsschlitz 18 parallel zur Achse 14 geführt, so daß sich das Schneckenglied 15 bei einer Drehung des Fokussier-Einstellringes 12 in axialer Richtung bewegt und dabei das Schubelement 17 entlang der Achse 14 verschiebt.

Mit dem Schubelement 17 justierbar verbunden ist ein Tragelement 19, auf dem eine Kurvenscheibe 20 drehbar gelagert ist. Die Kurvenscheibe 20 greift mit einer Nase 21 in eine Schlitzführung 22 ein, die mit dem Dioptrie-Einstellring 13 verbunden ist. Bei entriegeltem Dioptrie-Einstellring 13 kann daher die Kurvenscheibe 20 durch Mitnehmen der Nase 21 in der Schlitzführung 22 um die Achse 14 gedreht werden.

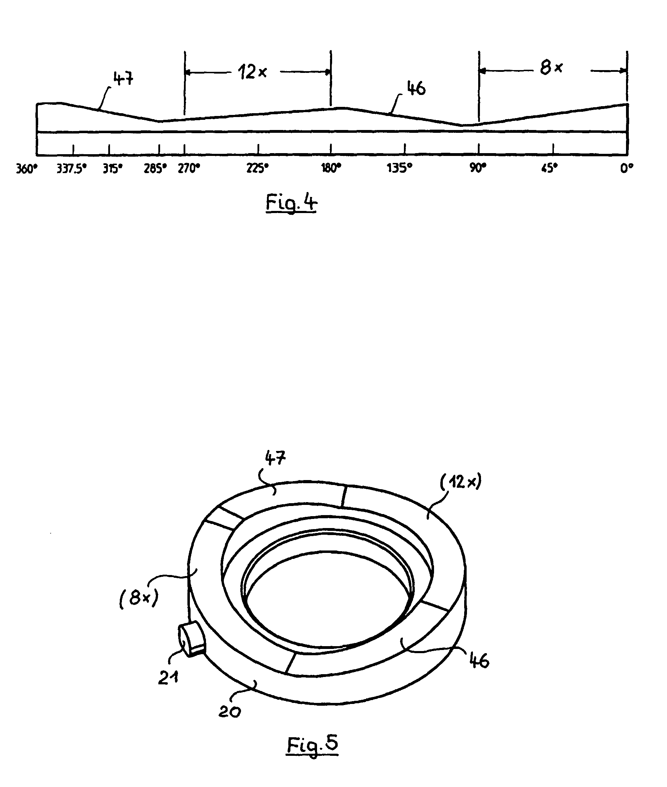

Die Kurvenscheibe 20 liegt mit ihrer steuernden Stirnfläche an einer Übertragungsstange 23 an, die über ein auf einer Stange 25 geführtes Zwischenstück und einen daran in radialer Richtung angeformten Zapfen mit einem Halter 24 für das Fokussierglied 5 verbunden ist. Anstelle einer kraftschlüssigen Anlage der Kurvenscheibe 20 an der Übertragungsstange 23 kann auch ein Formschluß vorgesehen sein. Der Halter 24 wird auf dem Zapfen radial mit einer Feder an die Innenwand des Fernrohres 1 gedrückt und somit spielfrei parallel zur Achse 14 geführt. Bei einer Drehung der Kurvenscheibe 20 durch Betätigung des entriegelten Dioptrie-Einstellringes 13 werden daher die Übertragungsstange 23 und damit das Fokussierglied 5 entsprechend der jeweiligen Höhe der Stirnfläche der Kurvenscheibe 20 verstellt. Eine Höhenabwicklung der Stirnfläche der Kurvenscheibe 20 ist in Fig.4 dargestellt. Bei erneuter Verriegelung des Dioptrie-Einstellringes 13 mit dem Fokussier-Einstellring 12 wird die gewählte Dioptrie-Verstellung festgelegt.

Bei Verriegelung des Dioptrie-Einstellringes 13 mit dem Zylinderelement 39 besteht über die Verriegelungselemente eine getriebliche Kopplung zwischen dem Zahnrad 11 und der Schlitzführung 22. Über eine Drehung des Vergrößerungs-Einstellringes 9 am Okular wird daher die Kurvenscheibe 20 in die Position der gewählten Vergrößerung verdreht und verschiebt damit über die Übertragungsstange 23 das Fokussierglied 5 nochmals. Die Höhenänderung in der Stirnfläche der Kurvenscheibe 20 entspricht dem bereits erläuterten Wert. Bei einer Betätigung des Fokussier-Einstellringes 12 bleibt die in Abhängigkeit von der Vergrößerungsänderung eingestellte Stellung der Kurvenscheibe 20 erhalten. Durch die weite räumliche Trennung des Fokussier-Einstellringes 12 und des Dioptrie-Einstellringes 13 von dem Vergrößerungs-Einstellring 9 ist eine unbeabsichtigte Verstellung des korrekten Dioptrie-Ausgleichs und der Fokussierung ausgeschlossen.

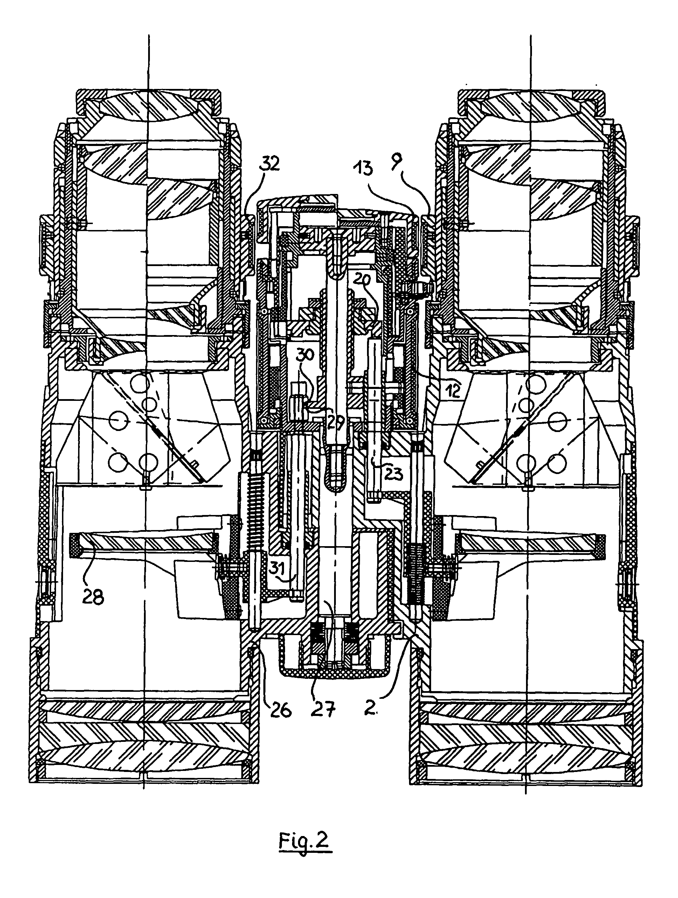

Fig.2 zeigt ein binokulares Fernrohr. An dem Gehäuse 2 des monokularen Teiles des Fernrohres 1 ist ein zweites Fernrohr-Gehäuse 26 mit gleichem optischem Aufbau schwenkbar angeordnet. Die Schwenkachse 27 fluchtet mit der Achse 14 des Fokussier-Einstellringes 12 und des Dioptrie-Einstellringes 13, so daß dieser Teil des Gehäuses 2 die Schwenkbrücke des binokularen Fernrohres bildet.

Zur Verstellung eines Fokussiergliedes 28 in dem zweiten Fernrohr-Gehäuse 26 ist an das Schubelement 17 ein Mitnehmer 29 angefügt, der in eine Nut 30 am oberen Ende einer zweiten Übertragungsstange 31 eingreift. Der Mitnehmer 29 ist in an sich bekannter Weise als Kreissegmentscheibe ausgebildet, so daß der Eingriff mit der Übertragungsstange 31 bei einem Schwenken des zweiten Fernrohr-Gehäuses 26 zur Augenweiteneinstellung nicht unterbrochen wird. Die Drehung des Fokussier-Einstellringes 12 wirkt somit synchron auf beide Fokussierglieder 5, 28.

Zur binokularen Scharfabbildung muß in diesem Ausführungsbeispiel zunächst mit dem dem Fokussierglied 28 zugeordneten Auge eine Scharfabbildung auf ein Objekt eingestellt werden. Nach darauf folgender Entriegelung des Dioptrie-Einstellringes 13 kann dann das Fokussierglied 5 über die Drehung der Kurvenscheibe 20 solange verstellt werden bis ein evtl. vorhandener Unterschied zur Sehschärfe des anderen Auges ausgeglichen ist. Danach muß der Dioptrie-Einstellring 13 wieder verriegelt werden.

Zur Veränderung der Okularvergrößerung weisen in dem dargestellten Ausführungsbeispiel beide Okulare voneinander unabhängig betätigbare Vergrößerungs-Einstellringe 9, 32 auf, wobei nur in den Endstellungen eine optimale Korrektur der Abbildungsleistung vorgesehen ist und daher auch nur diese Stellungen für die Beobachtung genutzt werden sollen. Nur der Vergrößerungs-Einstellring 9 ist in diesem Ausführungsbeispiel getrieblich mit der Kurvenscheibe 20 verbunden. Zur sicheren Einstellung des vergrößerungsabhängigen Anteils der Dioptrie-Verstellung ist daher eine Sicherung vorgesehen, die eine Ent- und Verriegelung des Dioptrie-Einstellringes 13 nur in den Endstellungen des Vergrößerungs-Einstellringes 9 erlaubt. Vorzugsweise ist der Ausgleich des Sehschärfeunterschiedes in der Stellung der größten Okularvergrößerung vorzunehmen.

Die Kurvenscheibe 20 weist in diesem Fall auf ihrem Umfang zwei Segmente mit unterschiedlichen Höhen und Steigungen auf, die zum einen an eine niedrigere Okularvergrößerung Γ₁ und zum anderen an eine höhere Okularvergrößerung Γ₂ angepaßt sind. Anhand der Fig.4 und 5 wird das näher beschrieben. Die Übersetzungen zwischen dem Zahnkranz 10, dem Zahnrad 11 und zum Stellglied für die Kurvenscheibe 20 sind so gewählt, daß mit der Umschaltung der Okularvergrößerung das jeweils zugehörige Segment in Anlage mit der Übertragungsstange 23 gebracht wird. Bei zwei umschaltbaren Vergrößerungen Γ1, Γ₂ wird für den Vergrößerungs-Einstellring 9 vorzugsweise eine Drehung von ca. 90° für die Umstellung der Vergrößerungen vorgesehen. Das Übersetzungsverhältnis wird so eingestellt, daß dabei die Kurvenscheibe 20 und auch der Dioptrie-Einstellring 13 um 180° gedreht werden.

Bei einer Korrektur des Okulars für z.B. drei oder mehr diskret einstellbare Vergrößerungen können entsprechend mehr Segmente vorgesehen sein, die aufgrund einer angepaßten Übersetzung der Stellelemente jeweils in Wirkstellung gebracht werden können.

Die auf die beschriebene Weise eingestellte Relatiwerschiebung zwischen den beiden Fokussiergliedern 5, 28 berücksichtigt sowohl die Differenz in der Sehschärfe beider Augen als auch den darauf bezogenen vergrößerungsabhängigen Wert des Dioptrie-Ausgleichs. Bei einer nachfolgenden synchronen Verstellung der Fokussierglieder 5, 28 durch Betätigung des Fokussier-Einstellringes 12 wird das jeweils beobachtete Objekt mit beiden Augen scharf gesehen.

Es ist möglich, anstelle einer manuellen Betätigung der Vergrößerungs-Einstellringe 9, 32 eine elektro-mechanische Verstellung vorzusehen. Dann kann über einen zentralen elektronischen Taster eine synchrone Verstellung der Okularvergrößerung ausgelöst werden. Außerdem kann auch der zweiten Übertragungsstange 31 eine elektro-mechanisch angetriebene zweite Kurvenscheibe zugeordnet werden, die beim zweiten Fokussierglied 28 eine allein vergrößerungsabhängige Verstellung bewirkt. Bei einer solchen Anordnung wird nach einmaligem Ausgleich der Sehkraftunterschiede beider Augen die Scharfabbildung bei jeder Vergrößerungsänderung aufrecht erhalten.

Aus Fig.3 sind Details der bereits beschriebenen Wirkungsketten zu entnehmen. Der Dioptrie-Einstellring 13 ist in der linken Hälfte der Schnittdarstellung im entriegelten und in der rechten Hälfte im verriegelten Zustand gezeigt. Beiden Einstellungen sind Raststellungen 33, 34 zugeordnet.

Mit dem Dioptrie-Einstellring 13 ist ein inneres Zylinderelement 35 verbunden, in dem die bereits beschriebene Schlitzführung 22 für die Nase 21 an der Kurvenscheibe 20 angeordnet ist. In das Zylinderelement 35 ist am oberen Ende eine äußere, parallel zur Achse 4 gerichtete Verzahnung 36 eingefügt. Außerdem ist auf dem Außenmantel des Zylinderelementes 35 eine Hülse 37 drehbar gelagert. An die Hülse 37 ist am unteren Ende eine nach außen weisende Anschlagnase 38 angeformt, die in eine der Breite der Anschlagnase 38 entsprechende Ausnehmung 38' im Gehäuse 2 eingreift.

In das Gehäuse 2 ist ein äußeres Zylinderelement 39 drehbar eingesetzt. Unterhalb des Lagerrandes für das Zylinderelement 39 enthält dieses einen nach außen weisenden Zahnkranz 40, in den das Zahnrad 11 eingreift. Außerdem ist an der inneren Mantelfläche eine Verzahnung 41 vorgesehen, die mit der Verzahnung 36 des inneren Zylinderelementes 35 korrespondiert. In dem entriegelten linken Teil der Darstellung sind die beiden Verzahnungen 36, 41 außer Eingriff und in dem verriegelten rechten Teil der Darstellung im Eingriff miteinander.

Der untere Rand des Zylinderelementes 39 enthält über einen Teil seines Umfangs einen der Höhe der Anschlagnase 38 entsprechenden Absatz 42, an dem die Anschlagnase 38 bei einer Drehung des Zylinderelementes 39 aufgrund einer Betätigung des Vergrößerungs-Einstellringes 9 anliegt. An den Begrenzung des Absatzes 42 weist das Zylinderelement 39 außerdem jeweils einen parallel zur Achse 4 nach oben gerichteten und der Breite der Anschlagnase 38 entsprechenden Schlitz auf. Nur wenn die Anschlagnase 38 diesem Schlitz gegenüber steht, ist eine Entriegelung des Dioptrie-Einstellringes 13 möglich. Die Nase 21 an der Kurvenscheibe 20 gleitet bei der Entriegelung in der Schlitzführung 22.

Im entriegelten Zustand ist eine Drehung des äußeren Zylinderelementes 39 und damit des Vergrößerungs-Einstellringes 9 wegen der im Gehäuse 2 festgelegten Anschlagnase 38 nicht möglich. Im verriegelten Zustand wird dagegen eine Drehung des äußeren Zylinderelementes 39 über die Verzahnung 36, 41 unmittelbar auf das innere Zylinderelement 35 übertragen, wobei über die in der Schlitzführung 22 liegende Nase 21 der Kurvenscheibe 20 diese mit gedreht wird.

Das Tragelement 19 für die Kurvenscheibe 20 kann auf dem Schubelement 17 in der Höhe eingestellt und über eine Konterverschraubung gesichert werden. Dabei ist über den Dioptrie-Einstellring 13 die Kurvenscheibe bei einer bestimmten Vergrößerungseinstellung in die Null-Stellung zu bringen. Das Fokussierglied 5 ist für eine afokale Abbildung des Gesamtsystems auszurichten.

Der Dioptrie-Einstellring 13 weist in seiner Oberseite ein Sichtfenster 43 auf und am Rand dazu eine nicht dargestellte Dioptrie-Skala. Unterhalb des Sichtfensters 43 ist auf dem inneren Zylinderelement 35 eine Zeigerscheibe 44 drehbar aufgelegt und über eine Lasche 45 mit dem äußeren Zylinderelement 39 gekoppelt. Bei der Entriegelung des Dioptrie-Einstellringes 13 wird die Zeigerscheibe 44 mit angehoben und die Lasche 45 gleitet dazu in einer entsprechenden Ausnehmung im äußeren Zylinderelement 39.

Die Dioptrie-Verstellung resultiert in einer relativen Verdrehung des inneren Zylinderelementes 35 gegenüber dem äußeren Zylinderelement 39, d.h. die Dioptrie-Skala wird gegenüber der Zeigerscheibe 44 verdreht, die dabei von dem äußeren Zylinderelement 39 über die Lasche 45 festgehalten wird. Wegen der immer unmittelbar unter dem Sichtfenster 43 liegenden Zeigerscheibe 44 entstehen keine Parallaxenfehler beim Ablesen des eingestellten Dioptrie-Ausgleichs.

Über die bereits beschriebene Verriegelung des Vergrößerungs-Einstellringes 9 wird erreicht, daß die Umschaltung der Okularvergrößerungen nur bei verriegeltem Dioptrie-Einstellring 13 ausgeführt werden kann. Die bei der Umschaltung auf das äußere Zylinderelement 39 übertragene Drehung bewirkt auch eine Drehung des Dioptrie-Einstellringes 13, so daß die Dioptrie-Skala und die Zeigerscheibe 44 synchron mitgedreht werden. Die beiden Segmentbereiche der Kurvenscheibe 20, die den unterschiedlichen Vergrößerungen zugeordnet sind, weisen dieselbe Kurvenlänge für gleiche Dioptrie-Verstellungen auf. Für die Dioptrie-Anzeige am Dioptrie-Einstellring 13 ergibt sich somit dieselbe Skalenspreizung, so daß nur eine einzige Dioptrie-Skala notwendig ist.

Aus der in Fig.4 dargestellten Höhenabwicklung H sind die um 180° zueinander versetzten Kurvenbereiche der Stirnfläche der Kurvenscheibe 20 ersichtlich. Der Winkelbereich von 0° bis 90° soll für die Dioptrie-Verstellung bei Γ₁ = 8-facher Okularvergrößerung vorgesehen sein und der Winkelbereich von 180° bis 270° für die Dioptrie-Verstellung bei Γ₂ = 12-facher Okularvergrößerung. Da ein Dioptrie-Ausgleich für ± -Werte notwendig ist, entsprechen die Höhenwerte H bei 45° und 225° der Nullstellung. Die Höhen H an diesen Stellen sind gleich. Der Übergang zwischen den Kurvenbereichen ist so gestaltet, daß die Kurvenscheibe bei ihrer Drehung für die Vergrößerungsänderung sprungfrei an der Übertragungsstange 23 entlanggleiten kann.

Fig.5 zeigt eine Ansicht der geschlossenen Kurvenscheibe 20 mit der angeformten Nase 21. Deutlich zu erkennen sind die beiden Kurvenbereiche unterschiedlicher Steigung für die beiden gewählten Vergrößerungen 8 x und 12 x. Dazwischen liegen ein Übergangsbereich 46 und eine aufgrund des durch den Absatz 42 und die Anschlagnase 38 begrenzten Drehbereichs des äußeren Zylinderelementes 39 ungenutzter Bereich 47.

### Bezugszeichenliste

- 1: Fernrohr
- 2: Gehäuse
- 3: Objektiv
- 4: Umkehrsystem
- 5: Fokussierglied
- 6: Außenglied des Okulars
- 7,8: verschiebbare Linsenglieder
- 9: Vergrößerungs-Einstellring
- 10: äußerer Zahnkranz
- 11: Zahnrad
- 12: Fokussier-Einstellring
- 13: Dioptrie-Einstellring
- 14: Achse
- 15: Schneckenglied
- 16: Zapfen
- 17: Schubelement
- 18: Längsschlitz
- 19: Tragelement
- 20: Kurvenscheibe
- 21: Nase
- 22: Schlitzführung
- 23: Übertragungsstange
- 24: Halter
- 25: Stange
- 26: zweites Fernrohrgehäuse
- 27: Schwenkachse
- 28: zweites Fokussierglied
- 29: Mitnehmer
- 30: Nut
- 31: zweite Übertragungsstange
- 32: zweiter Vergrößerungs-Einstellring
- 33,34: Raststellungen
- 35: inneres Zylinderelement
- 36: Verzahnung
- 37: Hülse
- 38: Anschlagnase
- 38': Ausnehmung im Gehäuse 2
- 39: äußeres Zylinderelement
- 40: Zahnkranz
- 41: Verzahnung
- 42: Absatz
- 43: Sichtfenster
- 44: Zeigerscheibe
- 45: Lasche
- 46: Übergangsbereich
- 47: ungenutzter Bereich

## Patentansprüche

1. Verfahren zur Fokussierung und zum Dioptrie-Ausgleich bei einem Fernrohr mit einem Objektiv (3) und einem diesem zugeordneten, über einen Fokussier-Einstellring (12) verschiebbaren Fokussierglied (5), dessen Grundstellung über einen riegelbaren Dioptrie-Einstellring (13) verstellbar ist, einem Umkehrsystem (4) und einem Okular, **dadurch gekennzeichnet, daß** bei Verwendung eines Okulars (6, 7, 8) mit veränderbarer Vergrößerung des Okulars (6, 7, 8) das Fokussierglied (5) bei einer Vergrößerungsänderung des Okulars (6, 7, 8) um einen von der Dioptrie-Verstellung und von der Vergrößerungsänderung des Okulars (6, 7, 8) abhängigen Wert derart verstellt wird, daβ die Scharfabbildung bein Vergrößerungswechsel konstant bleibt.

2. Verfahren nach Anspruch 1, **dadurch gekennzeichnet, daß** ausgehend von einer Dioptrie-Verstellung z₁ und einer Okularvergrößerung Γ₁ bei einer Okularvergrößerung Γ₂ als Wert für die Dioptrie-Verstellung z₂ = (Γ₁/Γ₂)² ∗ z₁ eingestellt wird.

3. Fernrohr mit einem Objektiv (3) und einem diesem zugeordneten, über einen Fokussier-Einstellring (12) verschiebbarem Fokussierglied (5), dessen Grundstellung über einen riegelbaren Dioptrie-Einstellring (13) verstellbar ist, einem Umkehrsystem (4) und einem Okular (6), **dadurch gekennzeichnet, daß** bei Verwendung eines Okulars (6, 7, 8) mit veränderbarer Vergrößerung dem Dioptrie-Einstellring (13) eine Kurvenscheibe (20) zur Verstellung des Fokussiergliedes (5) derart zugeordnet ist, daß in Abhängigkeit von einer Änderung der Okularvergrößerung die Kurvenscheibe (20) um einen von der Dioptrie-Verstellung und von der Vergrößerungsänderung abhängigen Wert derart verstellbar ist, daβ die Scharfabbildung bein Vergrößerungswechsel konstant bleibt.

4. Fernrohr nach Anspruch 3, **dadurch gekennzeichnet, daß** die Kurvenscheibe (20) als Stirnkurve ausgebildet ist, deren Stirnfläche an einer Übertragungsstange (23) zur Verstellung des Fokussiergliedes (5) anliegt.

5. Fernrohr nach Anspruch 3, **dadurch gekennzeichnet, daß** zwischen der Kurvenscheibe (20) und einer Übertragungsstange (23) ein Formschluß besteht.

6. Fernrohr nach Anspruch 4 oder 5, **dadurch gekennzeichnet, daß** die Kurvenscheibe (20) mit einem Vergrößerungs-Einstellring (9) zur Veränderung der Okularvergrößerung derart gekoppelt ist, daß nur bei verriegeltem Dioptrie-Einstellring (13) durch Betätigung des Vergrößerungs-Einstellringes (9) eine Verstellung der Kurvenscheibe (20) erfolgt.

7. Fernrohr nach Anspruch 6, **dadurch gekennzeichnet, daß** eine Verriegelung (38, 38') vorgesehen ist, die bei entriegeltem Dioptrie-Einstellring (13) eine Drehung des Vergrößerungs-Einstellringes (9) blockiert.

8. Fernrohr nach einem der Ansprüche 4 bis 7, **dadurch gekennzeichnet, daß** bei Verwendung eines Okulars (6, 7, 8) mit diskret einstellbaren Vergrößerungen jeder Vergrößerungseinstellung ein Segmentbereich der Kurvenscheibe (20) zur vergrößerungsabhängigen Dioptrie-Verstellung zugeordnet ist, der über den Vergrößerungs-Einstellring (9) in Wirkstellung zur Übertragungsstange (23) bringbar ist.

9. Fernrohr nach Anspruch 8, **dadurch gekennzeichnet, daß** eine Entriegelung des Dioptrie-Einstellringes (13) zur Veränderung der Grundstellung des Fokussiergliedes (5) nur in den diskreten Vergrößerungen zugeordneten Positionen des Vergrößerungs-Einstellringes (9) vorgesehen ist.

10. Fernrohr nach Anspruch 8, **dadurch gekennzeichnet, daß** die Segmentbereiche der Kurvenscheibe für alle einstellbaren Okularvergrößerungen gleich lang sind.

11. Binokulares Fernrohr mit zwei über eine Gelenkbrücke verbundenen Fernrohren (1; 26) nach einem der Ansprüche 3 bis10, wobei der Fokussier-Einstellring (12) und der Dioptrie-Einstellring (13) fluchtend zur Schwenkachse (27) der Gelenkbrücke drehbar gelagert sind, **dadurch gekennzeichnet, daß** die Kurvenscheibe (20) an der Übertragungsstange (23) des einen Fernrohres (1) anliegt, das mit der Gelenkbrücke starr verbunden ist und der diesem Fernrohr (1) zugeordnete Vergrößerung-Einstellring (9) bei verriegeltem Dioptrie-Einstellring (13) mit der Kurvenscheibe (20) gekoppelt ist.

12. Binokulares Fernrohr nach Anspruch 11, **dadurch gekennzeichnet, daß** die nach außen weisenden Linsenglieder des Objektivs (3) und des Okulars (6) feststehend angeordnet sind.

## Claims

1. Method for focusing and dioptre compensation in a telescope having an objective (3) and a focusing element (5) associated with the latter and displaceable by a focusing adjustment ring (12), whose basic position can be adjusted by a lockable dioptre adjustment ring (13), and comprising an inverting system (4) and an eyepiece, **characterized in that**, when use is made of an eyepiece (6, 7, 8) with variable magnification of the eyepiece (6, 7, 8), during a change in the magnification of the eyepiece (6, 7, 8), the focusing element (5) is adjusted by a value dependent on the dioptre adjustment and on the magnification change of the eyepiece (6, 7, 8), such that the definition remains constant during the change in magnification.

2. Method according to claim 1, **characterized in that**, starting from a dioptre adjustment z₁ with an eyepiece magnification Γ₁, z₂ = (Γ₁/Γ₂)² ∗ z₁ is set as the value of the dioptre adjustment at an eyepiece magnification Γ₂.

3. Telescope having an objective (3) and a focusing element (5) associated with the latter and displaceable by a focusing adjustment ring (12), whose basic position can be adjusted by a lockable dioptre adjustment ring (13), and comprising an inverting system (4) and an eyepiece (6), **characterized in that**, when use is made of an eyepiece (6, 7, 8) with variable magnification, the dioptre adjustment ring (13) is assigned a cam disc (20) for adjusting the focusing element (5) in such a way that, on the basis of a change in the eyepiece magnification, the cam disc (20) can be adjusted by a value dependent on the dioptre adjustment and on the magnification change, such that the definition remains constant during the change in magnification.

4. Telescope- according to claim 3, **characterized in that** the cam disc (20) is formed as a face cam, whose end face bears on a transmission rod (23) for adjusting the focusing element (5).

5. Telescope according to Claim 3, **characterized in that** there is a form-fitting connection between the cam disc (20) and a transmission rod (23).

6. Telescope according to Claim 4 or 5, **characterized in that** the cam disc (20) is coupled to a magnification adjustment ring (9) for changing the eyepiece magnification, in such a way that an adjustment of the cam disc (20) takes place only when the dioptre adjustment ring (13) is locked as a result of actuation of the magnification adjustment ring (9).

7. Telescope according to Claim 6, **characterized in that** a locking means (38, 38') is provided which blocks rotation of the magnification adjustment ring (9) when the dioptre adjustment ring (13) is unlocked.

8. Telescope according to one of Claims 4 to 7, **characterized in that**, when use is made of an eyepiece (6, 7, 8) with discretely adjustable magnifications, each magnification adjustment is assigned a segment region of the cam disc (20), which can be brought into an operative position with respect to the transmission rod (23) via the magnification adjustment ring (9), for the magnification-dependent dioptre adjustment.

9. Telescope according to Claim 8, **characterized in that** unlocking of the dioptre adjustment ring (13) to change the basic position of the focusing element (5) is provided only in the positions of the magnification adjustment ring (9) associated with the discrete magnifications.

10. Telescope according to Claim 8, **characterized in that** the segment regions of the cam disc are equally long for all the adjustable eyepiece magnifications.

11. Binocular telescope having two telescopes (1; 26) connected via a hinged bridge, according to one of Claims 3 to 10, the focusing adjustment ring (12) and the dioptre adjustment ring (13) being rotatably mounted in alignment with the pivot axis (27) of the hinged bridge, **characterized in that** the cam disc (20) bears on the transmission rod (23) of one telescope (1), which is rigidly connected to the hinged bridge, and the magnification adjustment ring (9) associated with this telescope (1) is coupled to the cam disc (20) when the dioptre adjustment ring (13) is locked.

12. Binocular telescope according to Claim 11, **characterized in that** the outwardly pointing lens elements of the objective (3) and of the eyepiece (6) are arranged in a fixed manner.

## Revendications

1. Procédé de mise au point et de correction dioptrique sur un télescope comprenant un objectif (3) et un élément de mise au point (5) associé à celui-ci pouvant être déplacé par le biais d'une bague de réglage de la mise au point (12) et dont le réglage de base peut être réglé par le biais d'une bague de réglage dioptrique (13) verrouillable, un système d'inversion (4) et un oculaire, **caractérisé en ce qu'**en cas d'utilisation d'un oculaire (6, 7, 8) à grossissement variable de l'oculaire (6, 7, 8), l'élément de mise au point (5), en cas de modification du grossissement de l'oculaire (6, 7, 8) est reglé d'une valeur qui dépend de la correction dioptrique et de la modification du grossissement de l'oculaire (6, 7, 8) de telle sorte que la représentation de la netteté reste constante lors d'un changement de grossissement.

2. Procédé selon la revendication 1, **caractérisé en ce qu'**en partant d'une correction dioptrique z₁ et d'un grossissement d'oculaire Γ₁ avec un grossissement d'oculaire Γ₂ en tant que valeur réglée pour la correction dioptrique on ajuste z₂ = (Γ₁/Γ₂)² ∗ z₁.

3. Télescope muni d'un objectif (3) et d'un élément de mise au point (5) associé pouvant être déplacé par le biais d'une bague de réglage de la mise au point (12) et dont le réglage de base peut être réglé par le biais d'une bague de réglage dioptrique (13) verrouillable, d'un système d'inversion (4) et d'un oculaire (6), **caractérisé en ce qu'**en cas d'utilisation d'un oculaire (6, 7, 8) à grossissement variable, une commande à came (20) de réglage de l'élément de mise au point (5) est associée à la bague de réglage dioptrique (13) de telle sorte que, suivant une modification du grossissement de l'oculaire, la commande à came (20) peut être déplacée d'une valeur dépendant de la correction dioptrique et de la modification du grossissement de telle sorte que la représentation de la netteté reste constante lors d'un changement de grossissement.

4. Télescope selon la revendication 3, **caractérisé en ce que** la commande à came (20) est réalisée sous la forme d'une came frontale dont la surface frontale repose sur une tige de transmission (23) pour le réglage de l'élément de mise au point (5).

5. Télescope selon la revendication 3, **caractérisé en ce qu'**il existe un engagement géométrique entre la commande à came (20) et une tige de transmission (23).

6. Télescope selon la revendication 4 ou 5, **caractérisé en ce que** la commande à came (20) est couplée avec une bague de réglage du grossissement (9) destinée à modifier le grossissement de l'oculaire de telle sorte qu'un déplacement de la commande à came (20) en actionnant la bague de réglage du grossissement (9) n'ait lieu que si la bague de réglage dioptrique (13) est verrouillée.

7. Télescope selon la revendication 6, **caractérisé en ce qu'**il est prévu un dispositif de verrouillage (38, 38') qui bloque une rotation de la bague de réglage du grossissement (9) lorsque la bague de réglage dioptrique (13) est déverrouillée.

8. Télescope selon l'une des revendications 4 à 7, **caractérisé en ce que** lors de l'utilisation d'un oculaire (6, 7, 8) avec grossissements discrets réglables, une zone à segment de la commande à came (20) destinée à régler la dioptrie en fonction du grossissement est associée à chaque réglage du grossissement et peut être amenée en position active par rapport à la tige de transmission (23) par le biais de la bague de réglage du grossissement (9).

9. Télescope selon la revendication 8, **caractérisé en ce qu'**un déverrouillage de la bague de réglage dioptrique (13) en vue de modifier le réglage de base de l'élément de mise au point (5) est seulement prévu dans les positions de la bague de réglage du grossissement (9) associées aux grossissements discrets.

10. Télescope selon la revendication 8, **caractérisé en ce que** les zones à segment de la commande à came sont de même longueur pour tous les grossissements de l'oculaire réglables.

11. Télescope binoculaire comprenant deux télescopes (1 ; 26) selon l'une des revendications 3 à 10 reliés par un pont articulé, la bague de réglage de la mise au point (12) et la bague de réglage dioptrique (13) étant logées de manière à pouvoir tourner dans l'alignement de l'axe de pivotement (27) du pont articulé, **caractérisé en ce que** la commande à came (20) repose sur la tige de transmission (23) du télescope (1) qui est relié de manière rigide avec le pont articulé et la bague de réglage du grossissement (9) associée à ce télescope (1) est couplée avec la commande à came (20) lorsque la bague de réglage dioptrique (13) est verrouillée.

12. Télescope binoculaire selon la revendication 11, **caractérisé en ce que** les éléments de lentille de l'objectif (3) et de l'oculaire (6) qui sont dirigés vers l'extérieur sont montés de manière fixe.
